# EUROPÄISCHE PATENTSCHRIFT

(11) **EP 3 061 172 B1**
(45) Veröffentlichungstag und Bekanntmachung des Hinweises auf die Patenterteilung: **03.04.2019**
(21) Anmeldenummer: 13820771.7
(22) Anmeldetag: 20.12.2013
(51) Int. Cl.: H02J 3/38, H02J 3/32, H02J 15/00, F03D 9/00, H02M 7/06, H02M 7/44, H02S 10/12, F03D 9/10, F03D 9/11, H02J 3/36, H02J 7/34, F03D 9/25

(54) **ANLAGE ZUM ÜBERTRAGEN ELEKTRISCHER LEISTUNG**
INSTALLATION FOR TRANSMITTING ELECTRICAL POWER
INSTALLATION DE TRANSMISSION DE PUISSANCE ÉLECTRIQUE

(43) Veröffentlichungstag der Anmeldung: 31.08.2016
(73) Patentinhaber: Siemens Aktiengesellschaft, 80333 München (DE)
(72) Erfinder: KNAAK, Hans-Joachim, 91054 Erlangen (DE); DORN, Jörg, 96155 Buttenheim (DE); MENKE, Peter, 96237 Oberfüllbach (DE); UTZ, Bernd, 91058 Erlangen (DE); WEINHOLD, Michael, 90425 Nürnberg (DE)
(86) Internationale Anmeldenummer: PCT/EP2013/077785
(87) Internationale Veröffentlichungsnummer: WO 2015/090465

(56) Entgegenhaltungen:
- EP-A1- 1 318 589
- EP-A2- 2 339 713
- DE-A1-102007 046 239
- US-A1- 2011 140 511
- US-A1- 2012 038 210

## Beschreibung

Die Erfindung betrifft eine Anlage zum Übertragen elektrischer Leistung zwischen einem ersten und einem zweiten Wechselspannungsnetz. An das zweite Wechselspannungsnetz ist ein selbstgeführter Umrichter anschließbar, der über eine Gleichspannungsverbindung mit einem unidirektionalen Gleichrichter verbunden ist. Der unidirektionale Gleichrichter ist wechselspannungsseitig mit dem ersten Wechselspannungsnetz und über das erste Wechselspannungsnetz mit einem Windpark verbindbar, wobei der Windpark wenigstens eine Windkraftanlage aufweist, die dazu eingerichtet ist, bei Windgeschwindigkeiten oberhalb einer Einschaltwindgeschwindigkeit elektrische Leistung in das erste Wechselspannungsnetz einzuspeisen.

Anlagen dieser Art sind aus dem Stand der Technik bekannt. Beispielsweise wird in dem Artikel von S. Bernal-Perez et al., "Off-shore Wind Farm Grid Connection using a Novel Diode-Rectifier and VSC-Inverter based HVDC Transmission Link", IECON, 2011, Seiten 3186-3191, eine Energieübertragungsanlage für den Einsatz in Windenergieanlagen offenbart. Die Energieübertragungsanlage umfasst einen als Diodengleichrichter ausgebildeten unidirektionalen Umrichter, der gleichspannungsseitig mit einem Gleichspannungszwischenkreis verbunden ist. Der Gleichspannungszwischenkreis erstreckt sich zwischen dem Diodengleichrichter und einem spannungseinprägenden Umrichter, der im Englischen auch als "Voltage Source Converter (VSC)" bezeichnet wird. Der unidirektionale Gleichrichter ist über Transformatoren und ein Wechselspannungsnetz mit einem Windpark der Windenergieanlage verbunden. Zum Zwecke der Blindleistungskompensation sind passive Filterelemente mit dem Wechselspannungsnetz des Windparks verbunden.

Die Übertragung von elektrischer Energie mit Hilfe von Gleichstrom ist bei vielen Anwendungen, insbesondere bei Übertragungsstrecken von mehreren Hundert Kilometern Länge, ökonomisch vorteilhaft.

Zu diesen Anwendungen zählen beispielsweise die bereits erwähnte Anbindung von im Meer aufgestellten Windparks an ein landseitiges Versorgungsnetz, die Energieversorgung von offshore-Einrichtungen (beispielsweise Ölplattformen) von Land aus und die Verbindung von zwei durch ein Meer getrennten Festlandnetzen.

Bei Gleichstromübertragungseinrichtungen werden oft zwei selbstgeführte Umrichter eingesetzt, die mittels einer Gleichspannungsverbindung miteinander verbunden sind. Eine solche Anordnung erlaubt einen bidirektionalen Leistungsfluss auch zwischen schwachen Wechselspannungsnetzen, so dass beispielsweise eine Stabilisierung eines schwachen Wechselspannungsnetzes durch ein starkes Wechselspannungsnetz erreicht werden kann. Ferner kann auf diese Weise auch während Schwachwindphasen, also dann, wenn die Windgeschwindigkeit in der Umgebung der Windkraftanlage unterhalb der Einschaltwindgeschwindigkeit der Windkraftanlage liegt, die zur Versorgung bestimmter Komponenten der Windkraftanlage benötigte Energie, wie beispielsweise einer Heizung, bereitgestellt werden.

Selbstgeführte Umrichter ermöglichen auch das "Hochfahren" von Wechselspannungsnetzen ("Black Start"). Sinkt die Windgeschwindigkeit in der Umgebung der Windkraftanlage unter die Einschaltwindgeschwindigkeit, so wird die Windkraftanlage üblicherweise abgeschaltet, weil bei solchen Windgeschwindigkeiten Energieerzeugung nicht möglich oder nicht wirtschaftlich ist. Steigt die Windgeschwindigkeit, so muss der Windpark erst "hochgefahren" werden. Zum Hochfahren des Windparks kann durch den seeseitigen Umrichter ein Wechselspannungsnetz erzeugt werden, wobei die dafür notwendige Versorgungsenergie dem landseitigen Energieversorgungsnetz entnommen werden kann. Diese Energie kann insbesondere auch dazu verwendet werden, beim Hochfahren der Windkraftanlage diese nach der Windrichtung auszurichten. Die Windenergieanlage des Windparks kann sich darüber hinaus auf das bestehende Wechselspannungsnetz aufsynchronisieren. Bei stärkerem Wind erfolgt die gewünschte Leistungsflussumkehr, nämlich die Leistungsübertragung von dem Windpark zum landseitigen Energieversorgungsnetz. Derzeit werden als Umrichter spannungseinprägende und selbstgeführte Umrichter (VSCs) und insbesondere Mehrstufenumrichter eingesetzt. Das Aufstellen solcher Umrichter im Meer ist jedoch aufgrund des immer noch hohen Gewichts der Umrichter kostenintensiv.

Die Verwendung eines unidirektionalen Gleichrichters erlaubt den Leistungstransport zwar nur in eine Richtung, weist jedoch den Vorteil auf, dass Verluste und das Gewicht des Gleichrichters im Vergleich zu einem selbstgeführten Umrichter deutlich herabgesetzt sind. Darüber hinaus sind im unidirektionalen Gleichrichter verhältnismäßig kompakte Leistungshalbleiter einsetzbar. Auch die Steuerung und Kühlung des unidirektionalen Gleichrichters kann unter Umständen weniger aufwändig gestaltet werden.

Bei der Anbindung des ersten Wechselspannungsnetzes an einen Windpark ist zudem die Richtung des Leistungstransports im Normalbetrieb vorgegeben, so dass die Einschränkung auf unidirektionale Energieübertragung keinen gravierenden Nachteil darstellt.

Nachteil dieses Konzeptes ist es jedoch, dass der unidirektionale Gleichrichter keine Energie in Schwachwindphasen sowie keine Wechselspannung zum Hochfahren der Windkraftanlage bereitstellen kann. Für den Betrieb der Anlage mit kommerziell üblichen Windturbinen wird jedoch das Vorhandensein einer frequenzstabilen Wechselspannung in dem mit dem Windpark verbundenen Wechselspannungsnetz vorausgesetzt. Diese benötigte Wechselspannung kann mittels eines unidirektionalen Gleichrichters nicht bereitgestellt werden.

Eine Möglichkeit, dieses Problem zu überwinden, ist der Einsatz eines speziell angepassten Windturbinenregelkonzeptes. In einem solchen Fall wären jedoch die kommerziell verfügbaren Windturbinen mit der üblichen Regelung nicht mehr einsetzbar.

Der Einsatz von herkömmlichen Dieselgeneratoren zur Bereitstellung von Energie in Schwachwindphasen ist aus Kosten- und Umweltgesichtspunkten ebenfalls ungünstig.

Die DE 10 2007 046 239 A1 offenbart ein Verfahren zur Energieübertragung elektrischer Energie einer Windkraftanlage in ein Stromversorgungsnetz. Bei dem Verfahren der DE 10 2007 046 239 A1 wird bei optimalen Windbedingungen mindestens ein Teil der von der Windkraftanlage erzeugten Energie in einem Zwischenspeicher zwischengespeichert. Zu Zeiten, wenn die Windkraftanlage weniger Leistung einbringen kann als dies der Nennleistung entspricht, wird zusätzlich elektrische Energie aus dem Zwischenspeicher hinzugefügt.

Aus der EP 2 339 713 A2 ist eine Anlage zum Übertragen elektrischer Energie von einer Quelle erneuerbarer Energie in ein Versorgungsnetz bekannt, bei der ein Energiespeicher dazu verwendet wird, einen Teil der Energie zwischenzuspeichern. Die zwischengespeicherte Energie wird in das Versorgungsnetz eingespeist, wenn die Energieerzeugung aus der Quelle erneuerbarer Energie nicht zufriedenstellend stabil ist.

Die US 2012/0038210 A1 beschreibt eine mechanische Batterie zum Speichern von Auftriebsenergie eines Auftriebskörpers.

Ausgehend vom Stand der Technik besteht die Aufgabe der Erfindung darin, bei einer Anlage der eingangs genannten Art den Windpark mit vergleichsweise einfachen Mitteln kostengünstig und zuverlässig mit elektrischer Energie zu versorgen.

Die Aufgabe wird durch eine Anlage gelöst, die eine mit dem ersten Wechselspannungsnetz und/oder mit der wenigstens einen Windkraftanlage verbindbare Energieerzeugungsvorrichtung zur Bereitstellung elektrischer Energie umfasst, wobei die Energieerzeugungsvorrichtung zum Umwandeln einer erneuerbaren Primärenergie aus ihrer Umgebung bei Windgeschwindigkeiten unterhalb der Einschaltwindgeschwindigkeit der wenigstens einen Windkraftanlage eingerichtet ist.

Ein Vorteil der erfindungsgemäßen Anlage ist die Möglichkeit der Stromversorgung der Windkraftanlage des Windparks auch während eines Stillstands der Windkraftanlage, weil aus der Primärenergie in der Umgebung der Energieerzeugungsvorrichtung ausreichend elektrische Energie gewonnen werden kann. Auch während also die Windkraftanlage keine Energie in das erste Wechselspannungsnetz einspeist, weil die Windgeschwindigkeit in der Umgebung der Windkraftanlage unterhalb der Einschaltwindgeschwindigkeit liegt, kann die Energieerzeugungsvorrichtung elektrische Energie erzeugen und zur Versorgung der Windkraftanlage bereitstellen.

Gemäß einer vorteilhaften Ausführungsform der Erfindung ist die Energieerzeugungsvorrichtung zur Erzeugung einer Wechselspannung im ersten Wechselspannungsnetz eingerichtet. Dadurch kann nach Bedarf ein Wechselspannungsnetz erzeugt werden, auf das sich die Windkraftanlage, wie bereits oben beschrieben, aufsynchronisieren kann. Es ist ebenfalls denkbar, dass die Energieerzeugungsvorrichtung Energie über separate Kabel den Windkraftanlagen zur Verfügung stellt. Mittels der zur Verfügung gestellten Energie können die Windkraftanlagen selbst starten und das Wechselspannungsnetz versorgen.

Vorzugsweise ist der unidirektionale Gleichrichter ein Dioden-gleichrichter. Diodengleichrichter erweisen sich in der Praxis als besonders kompakt und günstig in Herstellung und Betrieb.

Die erfindungsgemäße Anlage ist besonders geeignet für Anwendungen, bei denen die in einem offshore-Windpark erzeugte elektrische Energie, wobei der offshore-Windpark üblicherweise mehrere Hundert Kilometer vom Ufer in einem Meer oder einer See angeordnet ist, in ein an Land angeordnetes Energieversorgungsnetz übertragen werden soll. Da die Energieübertragung zum Land in diesem Fall über eine Gleichspannungsverbindung erfolgt, ist der unidirektionale Gleichrichter bevorzugt auf einer Hochseeplattform angeordnet. Entsprechend ist der selbstgeführte Umrichter an Land angeordnet.

Bei einer Windparkanwendung kann beispielsweise die Energieerzeugungsvorrichtung gemeinsam mit dem unidirektionalen Gleichrichter auf einer im Meer aufgeständerten Hochseeplattform angeordnet sein, wobei die Energieerzeugungsvorrichtung und der Gleichrichter auch auf zwei oder mehr voneinander räumlich getrennten Plattformen angeordnet sein können. Denkbar ist in diesem Fall auch, die Energieerzeugungsvorrichtung an einer der Säulen der Windkraftanlagen anzubringen.

Gemäß einer Ausführungsform der erfindungsgemäßen Vorrichtung umfasst die Energieerzeugungsvorrichtung wenigstens eine Schwachwind-Windturbine zum Umwandeln von Windenergie in elektrische Energie. Derartige Schwachwind-Windturbinen sind für Energieerzeugung in Schwachwindphasen optimiert. Bei starkem Wind werden diese mit herkömmlichen Maßnahmen (durch mechanische Bremsung, Drehen aus dem Wind, Bringen der Blätter der Turbine in Segelstellung) vor Schaden geschützt. Eine Energielieferung durch die Schwachwind-Windturbinen ist nach Anlauf der Windkraftanlage nicht mehr nötig. Die Schwachwind-Turbine kann, wenn dies zweckmäßig ist, derart konstruiert werden, dass bei Starkwind aufgrund strömungstechnischer Eigenschaften (Strömungsabriss) nur ein kleines Drehmoment erzeugt wird.

Als besonders vorteilhaft wird angesehen, wenn die wenigstens eine Schwachwind-Windturbine eine Vertikalachsen-Windturbine ist. Ein besonderer Vorteil der Vertikalachsen-Windturbine ist es, dass sie beim Anlaufen nicht erst zur Windrichtung ausgerichtet werden muss. Daher kann die Vertikalachsen-Windturbine bereits bei kleinen Windstärken in Betrieb genommen werden. Die Vertikalachsen-Windturbine kann beispielsweise eine Darrieus-Turbine oder eine Savonius-Turbine sein.

Gemäß einer weiteren Ausführungsform der erfindungsgemäßen Anlage umfasst die Energieerzeugungsvorrichtung wenigstens ein Photovoltaikmodul mit wenigstens einer Fotovoltaikzelle zum Umwandeln von Sonnenenergie in elektrische Energie. Diese Ausführungsform hat den Vorteil, dass die Energieerzeugungsvorrichtung elektrische Energie unabhängig von den Windverhältnissen in ihrer Umgebung bereitstellen kann.

Nach einer weiteren Ausführungsform der erfindungsgemäßen Anlage umfasst die Energieerzeugungsvorrichtung wenigstens einen Wärmekollektor zum Umwandeln von Sonnenenergie in Wärme. . Die Wärme kann direkt zum Beheizen der Windkraftanlage verwendet werden.

Es erscheint ferner vorteilhaft, wenn die Energieerzeugungsvorrichtung wenigstens eine Strömungsturbine zum Umwandeln von kinetischer Meeresenergie in elektrische Energie und/oder einen Wellenenergiewandler zum Umwandeln von potenzieller Meeresenergie in elektrische Energie umfasst.

Vorteilhaft nutzt die Energieerzeugungsvorrichtung mehrere der oben beschriebenen Energiequellen, um eine möglichst hohe Zuverlässigkeit der Energieerzeugung zu erreichen.

Die Energieerzeugungsvorrichtung kann beispielsweise auf bzw. in einer Gondel der Windkraftanlage angeordnet sein. Wenn es zweckmäßig ist, beispielsweise im Fall einer Nutzung der Strömungsturbine, kann zumindest ein Teil der Energieerzeugungsvorrichtung auch unter der Wasseroberfläche, beispielsweise an einem Fuß eines Turmes der Windkraftanlage oder zumindest teilweise im Turm angeordnet sein.

Es ist ferner von besonderem Vorteil, wenn die Energieerzeugungsvorrichtung wenigstens eine Energiespeichervorrichtung umfasst. Die Energiespeichervorrichtung ist dabei dazu vorgesehen, die von der Energieerzeugungsvorrichtung erzeugte Energie zwischen zu speichern, so dass sie nach Bedarf zum Betreiben der Windkraftanlage bereitgestellt werden kann. Der Energiespeicher kann beispielsweise eine wiederaufladbare Batterie umfassen.

Bevorzugt ist die Energiespeichervorrichtung zum Speichern von Auftriebsenergie eines Auftriebskörpers eingerichtet. Mittels der Energiespeichervorrichtung kann hierbei Energie gespeichert werden, indem ein Auftriebskörper im Wasser abgesenkt wird. Die Energie kann der Energiespeichervorrichtung entnommen werden, indem der Auftriebskörper durch die Auftriebskraft, die auf den Auftriebskörper unter Wasser wirkt, in Richtung der Wasseroberfläche verlagert wird.

Der Auftriebskörper kann beispielsweise per Seilwinde und Umlenkrolle gehoben und/oder gesenkt werden. Im Gegensatz zu den bekannten Varianten muss hierbei kein Wasser gepumpt werden, was den Wirkungsgrad der Energiespeichervorrichtung erhöht. Weiterhin kann auf bewegliche Ventile verzichtet werden, die beispielsweise durch eine einfache Stillstandbremse ersetzt werden können. Ebenso entfallen eventuelle thermische Probleme, die beim Verdichten oder Entspannen von Luft entstehen.

Es kann von Vorteil sein, einfache, billige Kunststoffauftriebskörper oder unten offene Behältnisse zu verwenden. Bevorzugt wird eine Mehrzahl von Auftriebskörpern eingesetzt. Dabei werden die Auftriebskörper um das Offshore-Bauwerk verteilt. Sie können z.B. jeweils über ein Zugseil nach unten gezogen werden. Die Umlenkrollen können am Meeresboden und/oder an Fundamenten der Windkraftanlage befestigt werden. Es können ferner übliche Seilwinden aus dem Schiffsbau verwendet werden, die auf Plattformen über dem Wasser oder im Offshore-Bauwerk angebracht sind. Denkbar ist ebenfalls, die Auftriebskörper innerhalb des Fundaments der Windkraftanlage anzuordnen. Gemäß einer weiteren Variante können die Auftriebskörper ringförmig um die Fundamente der Windkraftanlage angeordnet sein.

Es ist jedoch ebenfalls denkbar, zum Speichern von Energie einen Hohlkörper einzusetzen. Der Hohlkörper wird dabei mit Wasser oder einer anderen geeigneten Flüssigkeit gefüllt. Zur Entnehme von Energie kann der Körper entsprechend entleert werden. Zur Verbesserung der Energieaufnahmekapazität der Energiespeichervorrichtung ist es denkbar, mehr als einen Hohlkörper zu verwenden.

Denkbar ist es ebenfalls, dass die Energiespeichervorrichtung ein massives Gewichtelement umfasst, wobei durch ein Absenken des Gewichtelements der Energiespeichervorrichtung Energie entnommen werden kann. Das Gewichtelement kann beispielsweise im Turm der Windkraftanlage oder in Beinen einer Offshore-Plattform angeordnet sein.

Denkbar ist es ferner, den Stromrichter für den Seilwindenantrieb direkt am Zwischenkreis einer Windkraftanlage anzuschließen. Damit entfällt vorteilhaft der Einspeiseumrichter.

Weitere mögliche Varianten der Energiespeichervorrichtung können beispielsweise einen Druckluft, Wasserstoff- oder Methangaserzeugung nutzen.

Es ist darüber hinaus denkbar, die Energiespeichervorrichtung bei Normalbetrieb der Windkraftanlage (bei Windgeschwindigkeiten oberhalb der Einschaltgeschwindigkeit) zu speisen. Dabei stellt die Windkraftanlage die Energie über das Wechselspannungsnetz bereit. Die Energie kann beispielsweise in einem Energiespeicher gespeichert werden, der mit einer Anlage zur Blindleistungskompensation, beispielsweise einen sogenannten Static Synchronous Compensator (STATCOM), verbindbar ist. Dabei ist die Anlage zur Blindleistungskompensation vorzugsweise wechselspannungsseitig mit dem Wechselspannungsnetz verbindbar, wobei der Energiespeicher parallel zu einem Kondensator der Anlage geschaltet ist.

Die Energieerzeugungsvorrichtung und/oder die Windkraftanlage können des Weiteren mit einer Anordnung verbunden sein, die wenigstens eine Brennstoffzelle, beispielsweise eine Wasserstoff-Sauerstoff-Zelle, umfasst. Die Erzeugung von Wasserstoff durch Elektrolyse in der Brennstoffzelle findet vorzugsweise bei Windenergieüberschuss und die Stromerzeugung durch Brennstoffzelle bei Windmangel statt. Auf diese Weise kann eine besonders zuverlässige Energieversorgung des Windparks erreicht werden. Überschüssiger Wasserstoff kann bei Bedarf beispielsweise mit einem geeigneten Schiff abtransportiert werden.

Der beispielsweise an Land angeordnete selbstgeführte Umrichter kann geeigneterweise ein modularer Mehrstufenumrichter sein. Der modulare Mehrstufenumrichter weist Phasenmodule auf, deren Anzahl der Anzahl der Phasen des angeschlossenen zweiten Wechselspannungsnetzes entspricht. Dabei ist jedes Phasenmodul als Dreipol ausgebildet und weist zwei äußere Gleichspannungsanschlüsse und einen mittleren Wechselspannungsanschluss auf. Zwischen dem Wechselspannungsanschluss und jedem Gleichspannungsanschluss erstreckt sich ein Phasenmodulzweig, der eine Reihenschaltung aus zweipoligen Submodulen aufweist. Jedes Submodul ist mit einem Energiespeicher, wie beispielsweise einem unipolaren Kondensator, sowie einer dazu parallel angeordneten Leistungshalbleiterschaltung ausgerüstet. Die Leistungshalbleiterschaltung kann zum Beispiel als Halb- oder Vollbrückenschaltung ausgebildet sein. Bei der Halbbrückenschaltung ist eine Reihenschaltung von zwei ein- und abschaltbaren Leistungshalbleiterschaltern, wie beispielsweise IGBTs, IGCTs oder dergleichen, bereitgestellt, wobei jedem ein- und abschaltbaren Leistungshalbleiterschalter eine Freilaufdiode gegensinnig parallel geschaltet ist. Dabei ist eine erste Submodulanschlussklemme direkt mit einem Pol des Energiespeichers verbunden, während die andere Submodulanschlussklemme mit dem Potenzialpunkt zwischen den ein- und abschaltbaren Leistungshalbleiterschaltern verbunden ist. Bei einer Vollbrückenschaltung sind zwei Reihenschaltungen aus jeweils zwei ein- und abschaltbaren Leistungshalbleiterschaltern vorgesehen, wobei eine Submodulanschlussklemme mit dem Potenzialpunkt zwischen den ein- und abschaltbaren Leistungshalbleiterschaltern der ersten Reihenschaltung und die zweite Submodulanschlussklemme mit dem Potenzialpunkt zwischen den ein- und abschaltbaren Leistungshalbleiterschaltern der zweiten Reihenschaltung verbunden ist.

Gemäß einer Ausführungsform der Erfindung ist der unidirektionale Gleichrichter passiv gekühlt, beispielsweise über eine Luftkühlung, wobei die Kühlluft über geeignete Luftkanäle den zu kühlenden Teilen zugeführt werden kann. Denkbar ist in diesem Zusammenhang ebenfalls eine konvektive Ölkühlung. Bei Windparkanwendungen ist die verfügbare Kühlleistung gut mit der Verlustleistung, also der Menge der im Gleichrichter erzeugten Wärme, korreliert.

Zweckmäßigerweise ist der unidirektionale Gleichrichter über wenigstens einen Transformator mit dem seeseitigen Wechselspannungsnetz verbunden. Der Transformator ist in der Regel erforderlich, da der unidirektionale Gleichrichter ein fest vorgegebenes Übersetzungsverhältnis zwischen der anliegenden Gleich- und Wechselspannung vorgibt. Ferner sorgt der Transformator für eine unter Umständen erforderliche Potenzialtrennung. Darüber hinaus ist es zweckmäßig, in der Gleichspannungsverbindung in unmittelbarer Nachbarschaft zum unidirektionalen Gleichrichter eine Gleichspannungsglättungsdrossel anzuordnen. Die Glättungsdrossel kann dazu verwendet werden, eine Restwelligkeit der am Gleichspannungsausgang des unidirektionalen Gleichrichters erzeugten Gleichspannung zu reduzieren.

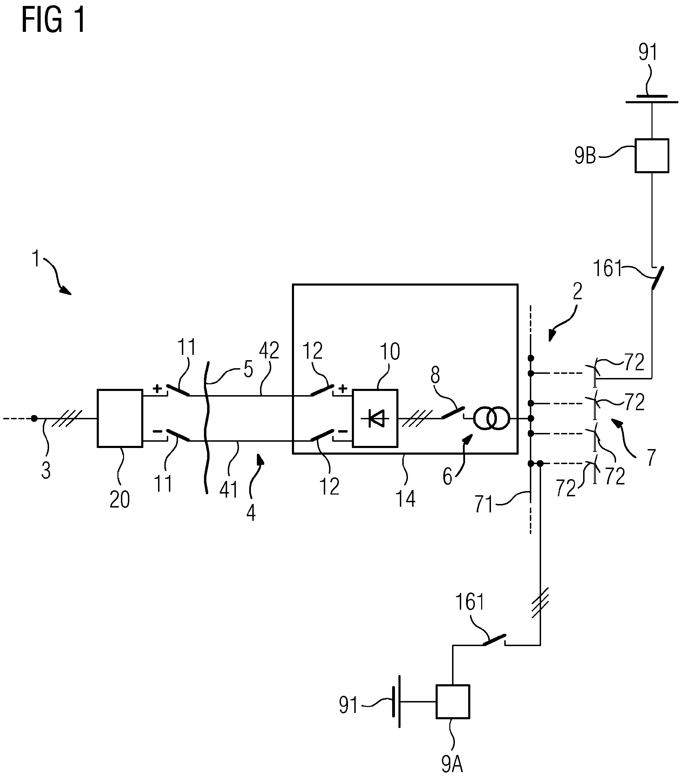

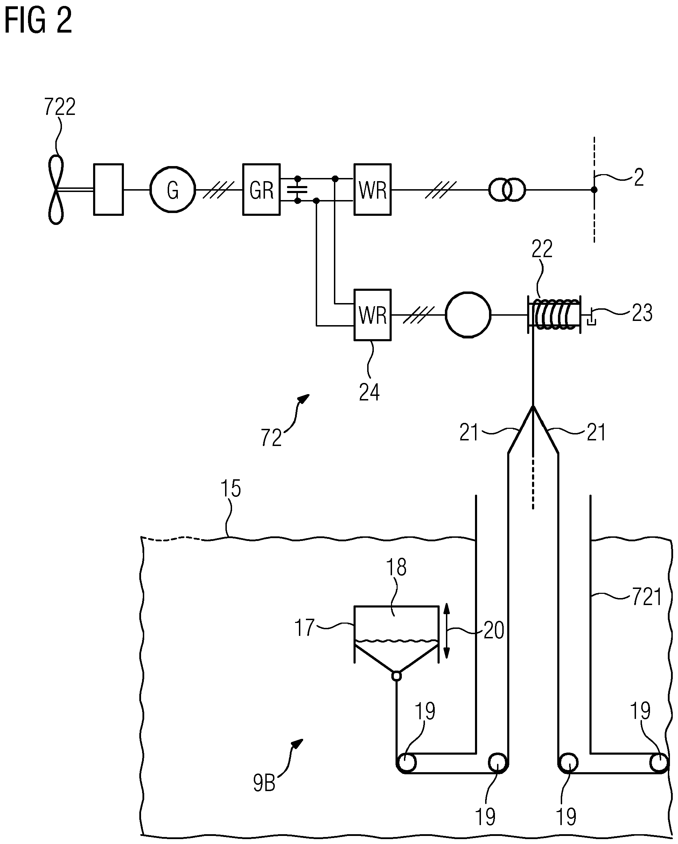

Die Erfindung wird im Folgenden anhand eines in Figuren 1 und 2 dargestellten Ausführungsbeispiels der erfindungsgemäßen Anlage näher erläutert.
- Figur 1: zeigt ein Ausführungsbeispiel einer erfindungsgemäßen Anlage zur Übertragung elektrischer Leistung in schematischer Darstellung.
- Figur 2: zeigt ein Ausführungsbeispiel einer Energiespeichervorrichtung der erfindungsgemäßen Anlage in schematischer Darstellung.

Figur 1 zeigt ein erstes seeseitiges Wechselspannungsnetz 2, das an einen Windpark 7 gekoppelt ist. Der Windpark 7 ist in einem Meer angeordnet und umfasst mehrere Windkraftanlagen 72, die dazu vorgesehen sind, Windenergie in elektrische Energie umzuwandeln. Das seeseitige, erste Wechselspannungsnetz 2 ist dreiphasig ausgebildet.

Gemäß dem Ausführungsbeispiel nach Figur 1 umfasst eine Anlage 1 zum Übertragen elektrischer Leistung einen Diodengleichrichter 10. Der Diodengleichrichter 10 ist wechselspannungsseitig mit dem seeseitigen ersten Wechselspannungsnetz 2 verbunden. Der Diodengleichrichter 10 kann eine dem Fachmann bekannte so genannte Sechs-Puls-Brücke oder aber dem Fachmann ebenfalls bekannte Zwölf-Puls-Brücke ausbilden.

Der Diodengleichrichter 10 ist gleichspannungsseitig an eine Gleichspannungsverbindung 4 angeschlossen, wobei die Gleichspannungsverbindung 4 Gleichspannungsleitungen 41 und 42 umfasst, die entgegengesetzt polarisiert sind. Die Gleichspannungsverbindung 4 ist von den seeseitig angeordneten Diodengleichrichter 10 ans Land geführt, wobei die Länge der Gleichspannungsverbindung 4 typischerweise zwischen 30km und 300km variieren kann. Das Meeresufer ist in Figur 1 durch die Uferlinie 5 angedeutet.

Ein selbstgeführter Umrichter 20 ist an Land angeordnet und gleichspannungsseitig an die Gleichspannungsverbindung angeschlossen. Wechselspannungsseitig ist der selbstgeführte Umrichter 20 mit einem zweiten, landseitigen Wechselspannungsnetz 3 verbunden. Das landseitige Wechselspannungsnetz 3 ist im gezeigten Beispiel ein Energieversorgungsnetz, an das eine Vielzahl von Verbrauchern angeschlossen ist. Das Wechselspannungsnetz 3 ist dreiphasig ausgebildet. Die Gleichspannungsleitungen 41 und 42 weisen jeweils zwei Gleichspannungsschalter 11 und 12 auf, die dazu vorgesehen sind, die Gleichspannungsleitungen 41 und 42 zu unterbrechen. Die Gleichspannungsschalter 11 und 12 sind beispielsweise mechanische Trennschalter oder elektronische Leistungsschalter. In dem ersten seeseitigen Wechselspannungsnetz 2 ist des Weiteren ein Schalter 8 vorgesehen, der dazu vorgesehen ist, das Wechselspannungsnetz 2 vom Diodengleichrichter 10 zu trennen. Beim Schalter 8 handelt es sich beispielsweise um einen Leistungsschalter.

Der Diodengleichrichter 10 ist auf einer Hochseeplattform 14 angeordnet, die auf dem Meeresboden mittels Plattformbeinen aufgeständert ist.

Die Anlage 1 umfasst ferner einen Transformator 6, dessen Primärwicklung mit dem Wechselspannungsanschluss des Diodengleichrichters 10 verbunden ist und dessen Sekundärwicklung mit einer Sammelschiene 71 verbunden ist, wobei die Windkraftanlagen 72 ebenfalls mit der Sammelschiene 71 verbunden sind.

In der in Figur 1 gezeigten Anlage 1 ist lediglich eine unidirektionale Energieübertragung von Windpark 7 zum zweiten Wechselspannungsnetz 3 möglich. Insbesondere in Schwachwindphasen, in denen die Windgeschwindigkeit in der Umgebung des Windparks 7 unterhalb einer Einschaltwindgeschwindigkeit der Windkraftanlagen 72 liegt, kann keine Energie vom Windpark in das zweite Wechselspannungsnetz 3 übertragen werden. Es kann jedoch auch in Schwachwindphasen notwendig sein, den Windpark 7 und die Windkraftanlagen 72 mit Energie zu versorgen. Sobald der Windpark 7 mit den Windkraftanlagen 72 Energie benötigt, beispielsweise zum Ausrichten der Windkraftanlagen 72, zum Ausrichten der Rotorblätter der Windkraftanlagen 72, zur Bereitstellung von Energie für eine Heizung der Windkraftanlagen 72, wird die hierzu erforderliche Leistung durch eine Netzerzeugungsvorrichtung 9B bereitgestellt. Die Energieversorgungsvorrichtung 9B ist in dem in Figur 1 dargestellten Ausführungsbeispiel der erfindungsgemäßen Anlage 1 mit einer der Windkraftanlagen 72 über einen Schalter 161 verbunden. Die Energieerzeugungsvorrichtung 9B umfasst eine Fotovoltaikanlage, die die Windkraftanlage 72 während Schwachwindphasen mit der nötigen Energie versorgen kann. Der Energieerzeugungsvorrichtung 9B ist ein Energiespeicherelement 91 zugeordnet, das im gezeigten Ausführungsbeispiel einen Hohlkörper umfasst, durch dessen Absenken im Wasser Energie gespeichert werden kann. Auf diese Weise ist eine Energieversorgung der Windkraftanlage 72 unabhängig von Windverhältnissen in der Umgebung des Windparks 7 sichergestellt.

Die Anlage 1 umfasst ferner eine Energieerzeugungsvorrichtung 9A, die über einen Schalter 161 mit dem ersten Wechselspannungsnetz 2 verbindbar ist. Die Energieerzeugungsvorrichtung 9A ist mit einer Mehrzahl von Vertikalachsenwindturbinen (figürlich nicht dargestellt) ausgestattet, die dazu eingerichtet sind, Windenergie in elektrische Energie umzuwandeln, wenn die Windgeschwindigkeit in der Umgebung der Vertikalachsenwindturbinen unterhalb der Einschaltwindgeschwindigkeit der Windkraftanlagen 72 liegt. Die Energieerzeugungsvorrichtung 9A kann somit eine Wechselspannung im ersten Wechselspannungsnetz 2 erzeugen, so dass die Windkraftanlagen 72 sich beim Hochfahren auf das erste Wechselspannungsnetz 2 aufsynchronisieren können.

Die Energieerzeugungsvorrichtung 9A verfügt über ein Energiespeicherelement 91. Das Energiespeicherelement 91 ist im in Figur 1 gezeigten Beispiel eine wiederaufladbare Batterie.

In Figur 2 ist ein Ausführungsbeispiel einer der Energieerzeugungsvorrichtung 9B zugeordneten Energiespeichervorrichtung 91 der in Figur 1 dargestellten Vorrichtung 1 schematisch dargestellt. Die Energiespeichervorrichtung 91 ist am Fuß eines Turmes 721 der Windkraftanlage 72 angeordnet. Im Normalbetrieb der Anlage 1, d.h., wenn die Windgeschwindigkeit in der Umgebung der Windkraftanlage 72 oberhalb der Einschaltwindgeschwindigkeit der Windkraftanlage 72 liegt, wandelt die Windkraftanlage 72 in üblicher Weise Windenergie in elektrische Energie um. Die Blätter 722 der Windkraftanlage 72 werden vom Wind in Drehung versetzt. Die aufgenommene Rotationsenergie wird mittels eines Generators G in elektrische Energie umgewandelt, wobei der Generator G eine dreiphasige Wechselspannung erzeugt. Die Wechselspannung wird mittels eines Gleichrichters GR in Gleichspannung umgewandelt und anschließend mittels eines Wechselrichters R in die gewünschte Wechselspannung umgewandelt. Diese Wechselspannung wird in das erste Wechselspannungsnetz 2 eingespeist.

Mittels der Energiespeichervorrichtung 91 kann die von der Windkraftanlage 72 erzeugte Energie gespeichert werden. Die Energieerzeugungsvorrichtung 91 umfasst einen Auftriebskörper 17, der ein nach unten offener Hohlbehälter ist. In einem Hohlraum 18 des Hohlkörpers 17 befindet sich Luft. Der Hohlkörper 17 ist verlagerbar angeordnet, was in Figur 2 durch einen Doppelpfeil 20 angedeutet ist. Der Hohlkörper 17 ist mittels eines Seils 21 mit einer Rolle 22 verbunden. Durch Aufwickeln des Seils 21 auf die Rolle 22 kann der Hohlkörper 17 bewegt werden. Die Bewegungsrichtung des Hohlkörpers 17 ist durch die Umlenkrollen 19 vorgegeben. Ferner weist die Energiespeichervorrichtung 91 eine Feststellbremse 23, die zum Feststellen der Rolle 22 eingerichtet ist. Der Hohlkörper 17 ist unterhalb der Wasseroberfläche 15 angeordnet. Auf den Hohlkörper 17 wirkt eine Auftriebskraft in Richtung der Wasseroberfläche 15. Die Bewegung des Hohlkörpers 17 in Richtung der Wasseroberfläche 15 bewirkt eine Drehung der Rolle 22. Diese Drehung der Rolle 22 kann durch einen Generator MG in elektrische Energie umgewandelt werden. Mittels eines Umrichters 24 kann die auf diese Weise gewonnene elektrische Energie der Windkraftanlage 72 zugeführt werden. Entsprechend kann die Energiespeichervorrichtung 91 der Windkraftanlage 72 Energie entnehmen, wenn die Windgeschwindigkeit in der Umgebung der Windkraftanlage 72 oberhalb der Einschaltwindgeschwindigkeit der Windkraftanlage 72 liegt. Die Speicherung der Energie durch die Energiespeichervorrichtung 91 erfolgt durch eine Verlagerung des Hohlkörpers 17 entgegen der Auftriebskraft, die auf ihn wirkt. In dem in Figur 2 dargestellten Ausführungsbeispiel weist die Energiespeichervorrichtung 91 eine Mehrzahl von Seilen 21 auf, mittels derer die Energiespeichervorrichtung 91 mit anderen Windkraftanlagen 72 und/oder mit der Photovoltaikanlage verbunden sein kann, so dass die Energieübertragung zwischen mehreren Windkraftanlagen 72 erfolgen kann.

### Bezugszeichentabelle

- 1: Anlage zur Übertragung elektrischer Leistung
- 2: zweites Wechselspannungsnetz
- 3: erstes Wechselspannungsnetz
- 4: Gleichspannungsverbindung
- 41, 42: Gleichspannungsleitung
- 5: Uferlinie
- 6: Transformator
- 7: Windpark
- 71: Sammelschiene
- 72: Windkraftanlage
- 721: Turm
- 722: Blätter
- 8: Schalter
- 9A, 9B: Energieerzeugungsvorrichtung
- 91: Energiespeicherelement
- 10: unidirektionaler Gleichrichter
- 11, 12: Gleichspannungsschalter
- 14: Hochseeplattform
- 15: Wasseroberfläche
- 161: Schalter
- 17: Auftriebskörper
- 18: Hohlraum
- 19: Umlenkrolle
- 20: Doppelpfeil
- 21: Seil
- 22: Rolle
- 23: Feststellbremse
- 24: Umrichter
- G: Generator
- GR: Gleichrichter
- MG: Generator
- WR: Wechselrichter

## Patentansprüche

1. Anlage (1) zum Übertragen elektrischer Leistung zwischen einem ersten Wechselspannungsnetz (2) und einem zweiten Wechselspannungsnetz (3) mit einem an das zweite Wechselspannungsnetz (3) anschließbaren selbstgeführten Umrichter (20), der über eine Gleichspannungsverbindung (4) mit einem unidirektionalen Gleichrichter (10) verbunden ist, wobei der unidirektionale Gleichrichter (10) wechselspannungsseitig mit dem ersten Wechselspannungsnetz und über das erste Wechselspannungsnetz (2) mit einem Windpark (7) verbindbar ist, wobei der Windpark (7) wenigstens eine Windkraftanlage (72) aufweist, die dazu eingerichtet ist, bei Windgeschwindigkeiten oberhalb einer Einschaltwindgeschwindigkeit elektrische Leistung in das erste Wechselspannungsnetz (2) einzuspeisen,
**gekennzeichnet durch**
eine mit dem ersten Wechselspannungsnetz (2) und/oder mit der wenigstens einen Windkraftanlage (72) verbindbare Energieerzeugungsvorrichtung (9A,9B) zur Bereitstellung elektrischer Energie, wobei die Energieerzeugungsvorrichtung (9A,9B) zum Umwandeln einer erneuerbaren Primärenergie aus ihrer Umgebung bei Windgeschwindigkeiten unterhalb der Einschaltwindgeschwindigkeit der wenigstens einen Windkraftanlage (72) eingerichtet ist.

2. Anlage (1) nach Anspruch 1,
**dadurch gekennzeichnet, dass**
die Energieerzeugungsvorrichtung (9A,9B) zur Erzeugung einer Wechselspannung im ersten Wechselspannungsnetz (2) eingerichtet ist.

3. Anlage (1), nach einem der Ansprüche 1 oder 2,
**dadurch gekennzeichnet, dass**
der unidirektionale Gleichrichter (10) ein Diodengleichrichter ist.

4. Anlage (1) nach einem der vorangehenden Ansprüche,
**dadurch gekennzeichnet, dass** der Windpark (7) in einem Meer oder einer See angeordnet ist.

5. Anlage (1) nach Anspruch 4,
**dadurch gekennzeichnet, dass**
der unidirektionale Gleichrichter auf einer Hochseeplattform (14) und der selbstgeführte Umrichter (20) an Land angeordnet sind.

6. Anlage (1) nach einem der vorangehenden Ansprüche,
**dadurch gekennzeichnet, dass**
die Energieerzeugungsvorrichtung (9A,9B) wenigstens eine Schwachwind-Windturbine zum Umwandeln von Windenergie in elektrische Energie umfasst.

7. Anlage (1) nach Anspruch 6,
**dadurch gekennzeichnet, dass**
die Energieerzeugungsvorrichtung (9A,9B) wenigstens eine Vertikalachsen-Windturbine umfasst.

8. Anlage (1) nach einem der vorangehenden Ansprüche,
**dadurch gekennzeichnet, dass**
die Energieerzeugungsvorrichtung (9A,9B) wenigstens ein Photovoltaikmodul zum Umwandeln von Sonnenenergie in elektrische Energie umfasst.

9. Anlage (1) nach einem der vorangehenden Ansprüche,
**dadurch gekennzeichnet, dass**
die Energieerzeugungsvorrichtung (9A,9B) wenigstens einen Wärmekollektor zum Umwandeln von Sonnenenergie in Wärme Energie umfasst.

10. Anlage (1) nach einem der Ansprüche 4 bis 8,
**dadurch gekennzeichnet, dass** die Energieerzeugungsvorrichtung (9A,9B) wenigstens eine Strömungsturbine oder einen Wellenenergiewandler zum Umwandeln von kinetischer und/oder potenzieller Meeresenergie in elektrische Energie umfasst.

11. Anlage (1) nach einem der vorangehenden Ansprüche,
**dadurch gekennzeichnet, dass** Energieerzeugungsvorrichtung (9A,9B) wenigstens eine Energiespeichervorrichtung (91) umfasst.

12. Anlage (1) nach Anspruch 11,
**dadurch gekennzeichnet, dass**
die Energiespeichervorrichtung (91) zum Speichern von Auftriebsenergie eines Auftriebskörpers eigerichtet ist.

13. Anlage (1) nach einem der vorangehenden Ansprüche,
**dadurch gekennzeichnet, dass**
der selbstgeführte Umrichter (20) ein modularer Mehrstufenumrichter ist.

14. Anlage (1) nach einem der vorangehenden Ansprüche,
**dadurch gekennzeichnet, dass**
der unidirektionale Gleichrichter (10) eine passive Kühlung aufweist.

15. Anlage (1) nach einem der vorhergehenden Ansprüche,
**dadurch gekennzeichnet, dass**
der unidirektionale Gleichrichter (10) über wenigstens einen Transformator (6) mit dem ersten Wechselspannungsnetz (2) verbindbar ist.

## Claims

1. Installation (1) for transmitting electrical power between a first alternating voltage network (2) and a second alternating voltage network (3) with a self-commutated converter (20) that can be connected to the second alternating voltage network (3), said converter being connected via a direct voltage connection (4) to a unidirectional rectifier (10), wherein the unidirectional rectifier (10) can be connected on its alternating voltage side to the first alternating voltage network and, via the first alternating voltage network (2), to a wind farm (7), wherein the wind farm (7) comprises at least one wind turbine (72) that is configured to feed electrical power into the first alternating voltage network (2) at wind speeds above a switch-on wind speed,
**characterized by**
an energy generation device (9A, 9B) for the provision of electrical energy that can be connected to the first alternating voltage network (2) and/or to the at least one wind turbine (72), wherein the energy generation device (9A, 9B) is configured to convert a renewable primary energy from its surroundings at wind speeds below the switch-on wind speed of the at least one wind turbine (72).

2. Installation (1) according to Claim 1,
**characterized in that** the energy generation device (9A, 9B) is configured to generate an alternating voltage in the first alternating voltage network (2).

3. Installation (1) according to one of Claims 1 and 2,
**characterized in that**
the unidirectional rectifier (10) is a diode rectifier.

4. Installation (1) according to one of the previous claims, **characterized in that** the wind farm (7) is arranged in a sea or a lake.

5. Installation (1) according to Claim 4,
**characterized in that**
the unidirectional rectifier is arranged on a deep-sea platform (14) and the self-commutated converter (20) is arranged on land.

6. Installation (1) according to one of the previous claims,
**characterized in that**
the energy generation device (9A, 9B) comprises at least one low-wind turbine for the conversion of wind energy into electrical energy.

7. Installation (1) according to Claim 6,
**characterized in that**
the energy generation device (9A, 9B) comprises at least one vertical-axis wind turbine.

8. Installation (1) according to one of the previous claims,
**characterized in that**
the energy generation device (9A, 9B) comprises at least one photovoltaic module for converting solar energy into electrical energy.

9. Installation (1) according to one of the previous claims,
**characterized in that**
the energy generation device (9A, 9B) comprises at least one thermal collector for converting solar energy into heat energy.

10. Installation (1) according to one of Claims 4 to 8,
**characterized in that**
the energy generation device (9A, 9B) comprises at least one flow turbine or a wave energy converter for converting kinetic and/or potential marine energy into electrical energy.

11. Installation (1) according to one of the previous claims,
**characterized in that**
the energy generation device (9A, 9B) comprises at least one energy storage device (91).

12. Installation (1) according to Claim 11,
**characterized in that**
the energy storage device (91) is configured to store flotation energy of a flotation body.

13. Installation (1) according to one of the previous claims,
**characterized in that**
the self-commutated converter (20) is a modular multi-stage converter.

14. Installation (1) according to one of the previous claims,
**characterized in that**
the unidirectional rectifier (10) comprises passive cooling.

15. Installation (1) according to one of the previous claims,
**characterized in that**
the unidirectional rectifier (10) can be connected via at least one transformer (6) to the first alternating voltage network (2) .

## Revendications

1. Installation de transmission de puissance électrique entre un premier réseau (2) de tension alternative et un deuxième réseau (3) de tension alternative, comprenant un convertisseur (20) à commutation autonome, pouvant être raccordé au deuxième réseau (3) de tension alternative et relié, par une liaison (4) de tension continue, à un redresseur (10) unidirectionnel, le redresseur (10) unidirectionnel pouvant être relié du côté de la tension alternative au premier réseau de tension alternative et par le premier réseau (2) de tension alternative à un parc (7) éolien, le parc (7) éolien ayant au moins une installation (72) d'éolienne, conçue pour, si la vitesse du vent est supérieure à une vitesse de connexion, injecter de la puissance électrique dans le premier réseau (2) de tension alternative,
**caractérisé par**
un système (9A, 9B) de production d'énergie, pouvant être relié au premier réseau (2) de tension alternative et/ou à la au moins une installation (72) d'éolienne pour mettre à disposition de l'énergie électrique, le système (9A, 9B) de production d'énergie étant conçu pour transformer une énergie primaire renouvelable à partir de son environnement, à des vitesses du vent en dessous de la vitesse de connexion de la au moins une éolienne (72).

2. Installation (1) suivant la revendication 1,
**caractérisée en ce que**
le système (9A, 9B) de production d'énergie est conçu pour la production d'une tension alternative dans le premier réseau (2) de tension alternative.

3. Installation (1) suivant l'une des revendications 1 ou 2,
**caractérisée en ce que**
le redresseur (10) unidirectionnel est un redresseur à diode.

4. Installation (1) suivant l'une des revendications précédentes,
**caractérisée en ce que**
le parc (7) éolien est disposé dans une mer ou dans un lac.

5. Installation (1) suivant la revendication 4,
**caractérisée en ce que**
le redresseur unidirectionnel est monté sur une plateforme (14) en haute mer et le convertisseur (20) à commutation autonome est monté à terre.

6. Installation (1) suivant l'une des revendications précédentes,
**caractérisée en ce que**
le système (9A, 9B) de production d'énergie comprend au moins une turbine éolienne à vent léger pour transformer de l'énergie éolienne en énergie électrique.

7. Installation (1) suivant la revendication 6,
**caractérisée en ce que**
le système (9A, 9B) de production d'énergie comprend au moins une turbine d'éolienne d'axe vertical.

8. Installation (1) suivant l'une des revendications précédentes,
**caractérisée en ce que**
le système (9A, 9B) de production d'énergie comprend au moins un module photovoltaïque pour transformer de l'énergie solaire en énergie électrique.

9. Installation (1) suivant l'une des revendications précédentes,
**caractérisée en ce que**
le système (9A, 9B) de production d'énergie comprend au moins un collecteur de chaleur pour transformer de l'énergie solaire en énergie calorifique.

10. Installation (1) suivant l'une des revendications 4 à 8,
**caractérisée en ce que**
le système (9A, 9B) de production d'énergie comprend au moins une turbine ou un convertisseur d'énergie des vagues pour transformer de l'énergie marine, cinétique et/ou potentielle en énergie électrique.

11. Installation (1) suivant l'une des revendications précédentes,
**caractérisée en ce que**
le système (9A, 9B) de production d'énergie comprend au moins un système (91) d'accumulation d'énergie.

12. Installation (1) suivant la revendication 11,
**caractérisée en ce que**
le système (91) d'accumulation d'énergie est conçu pour accumuler de l'énergie ascensionnelle d'un corps flottant.

13. Installation (1) suivant l'une des revendications précédentes,
**caractérisée en ce que**
le convertisseur (20) à commutation autonome est un convertisseur modulaire à plusieurs étages.

14. Installation (1) suivant l'une des revendications précédentes,
**caractérisée en ce que**
le redresseur (10) unidirectionnel a un refroidissement passif.

15. Installation (1) suivant l'une des revendications précédentes,
**caractérisée en ce que**
le redresseur (10) unidirectionnel peut être relié au premier réseau (2) de tension alternative par au moins un transformateur (6).
